# EUROPEAN PATENT SPECIFICATION

(11) **EP 3 950 432 B1**
(45) Date of publication and mention of the grant of the patent: **19.04.2023**
(21) Application number: 21185685.1
(22) Date of filing: 14.07.2021
(51) Int. Cl.: B60R 11/00, B60R 16/02

(54) **ELECTRIC COMPONENT MOUNTING STRUCTURE**
MONTAGESTRUKTUR FÜR ELEKTRONISCHE BAUTEILE
STRUCTURE DE MONTAGE DE COMPOSANTS ÉLECTRIQUES

(30) Priority: 07.08.2020 JP 2020134973
(43) Date of publication of application: 09.02.2022
(73) Proprietor: Suzuki Motor Corporation, Shizuoka 432-8611 (JP)
(72) Inventor: TAKAICHI, Kota, Hamamatsu-shi, Shizuoka, 432-8611 (JP)
(74) Representative: Henkel & Partner mbB

(56) References cited:
- DE-A1-102021 120 101
- JP-A- 2002 159 116
- JP-A- 2003 154 968
- JP-A- 2011 084 154
- JP-A- 2017 013 617

## Description

### [Technical Field]

The present invention relates to an electric component mounting structure.

### [Background Art]

Electric components, such as an electric connection box and a control unit, are mounted on a vehicle body in a vehicle, such as an automobile. As a conventional mounting structure for electric components of this kind, one described in JP2002-159116A is known. The electric component mounting structure described in JP2002-159116A includes an electric connection box disposed near a rear of a dash panel that separates an engine compartment at a front of the vehicle from a vehicle cabin behind the engine compartment. The electric connection box is fixed to a side panel with screws by two legs extending from the electric connection box.

A protruding part protrudes from a front side surface of the electric connection box and the protruding part is configured to receive a front impact from the dash panel before the electric connection box.

According to the technique described in JP2002-159116A, in the event of a vehicle collision, when the dash panel overhangs rearwards, the protruding part first hits the dash panel and receives the impact. Next, when an excessive load acts on the connection box body via the protruding part, the legs fixing the electric connection box are broken and the impact added to the connection box body is thereby relaxed. When the dash panel is pushed rearward and a mounting space of the electric connection box is crushed, the electric connection box with the broken legs can escape rearward, thus preventing the electric connection box from being crushed further.

### [Summary of Invention]

### [Technical Problem]

However, in the case of the prior art described in JP2002-159116A, if a steering support member that supports a steering wheel is disposed behind an electric component, the electric connection box cannot escape rearward in the event of a vehicle collision, and the electric connection box is sandwiched between the dash panel and the steering support member, and crushed.

The present invention has been implemented focusing on the above-described circumstances, and it is an object of the present invention to provide an electric component mounting structure that, in the event of a forward collision of the vehicle, can prevent the electric component from being sandwiched between a cowl panel and a steering support member, and crushed and can protect the electric component from an impact.

### [Solution to Problem]

The present invention is an electric component mounting structure including a dash panel extending in a vehicle width direction, a cowl panel connected to an upper part of the dash panel and extending in the vehicle width direction, a side panel connected to end portions of the dash panel and the cowl panel in the vehicle width direction and extending in a vehicle front-rear direction and a vehicle up-down direction, a steering support member disposed behind the cowl panel and extending in the vehicle width direction and a mounting bracket that attaches an electric component to a vehicle body, characterized in that the mounting bracket includes a body part to which the electric component is attached, a front leg part extending forward from the body part, an upper leg part extending upward from the body part and a lower leg part extending downward from the body part, the cowl panel includes a front mounting point to which the front leg part is connected, the side panel includes an upper mounting point to which the upper leg part is connected and a lower mounting point to which the lower leg part is connected, the lower mounting point is disposed behind the front mounting point, the upper mounting point is disposed above the steering support member and behind the lower mounting point and the upper leg part extends diagonally rearward and upward so as to be oriented rearward as the upper leg part goes upward in a side view of the vehicle.

### [Advantageous Effects of Invention]

Thus, according to the present invention, it is possible to provide an electric component mounting structure that, in the event of a forward collision of the vehicle, can prevent the electric component from being sandwiched between a cowl panel and a steering support member, and crushed and protect the electric component from an impact.

### [Brief Description of Drawings]

[Figure 1] Figure 1 is a rear view of an instrument panel of a vehicle provided with an electric component mounting structure according to an embodiment of the present invention.
[Figure 2] Figure 2 is a rear view of a cowl panel of the vehicle provided with the electric component mounting structure according to the embodiment of the present invention.
[Figure 3] Figure 3 is a rear view of an electric component of the vehicle provided with the electric component mounting structure according to the embodiment of the present invention.
[Figure 4] Figure 4 is a plan view of the electric component of the vehicle provided with the electric component mounting structure according to the embodiment of the present invention.
[Figure 5] Figure 5 is a cross-sectional view viewing from an arrow direction V-V of the vehicle provided with the electric component mounting structure illustrated in Figure 1.
[Figure 6] Figure 6 is a left side view of the electric component and the mounting bracket of the vehicle provided with the electric component mounting structure according to the embodiment of the present invention.
[Figure 7] Figure 7 is a left side view of a main bracket of the mounting bracket of the vehicle provided with the electric component mounting structure according to the embodiment of the present invention.
[Figure 8] Figure 8 is a left side view of the mounting bracket of the vehicle provided with the electric component mounting structure according to the embodiment of the present invention.

### [Description of Embodiment]

The electric component mounting structure according to the embodiment of the present invention is an electric component mounting structure including a dash panel extending in a vehicle width direction, a cowl panel connected to an upper part of the dash panel and extending in the vehicle width direction, a side panel connected to end portions of the dash panel and the cowl panel in the vehicle width direction and extending in a vehicle front-rear direction and a vehicle up-down direction, a steering support member disposed behind the cowl panel and extending in the vehicle width direction and a mounting bracket that attaches an electric component to a vehicle body, characterized in that the mounting bracket includes a body part to which the electric component is attached, a front leg part extending forward from the body part, an upper leg part extending upward from the body part and a lower leg part extending downward from the body part, the cowl panel includes a front mounting point to which the front leg part is connected, the side panel includes an upper mounting point to which the upper leg part is connected and a lower mounting point to which the lower leg part is connected, the lower mounting point is disposed behind the front mounting point, the upper mounting point is disposed above the steering support member and behind the lower mounting point and the upper leg part extends diagonally rearward and upward so as to be oriented rearward as the upper leg part goes upward in a side view of the vehicle. Thus, in the event of a forward collision of the vehicle, the electric component mounting structure according to the embodiment of the present invention can prevent the electric component from being sandwiched between the cowl panel and the steering support member, and crushed, and protect the electric component from an impact.

### [Embodiment]

Hereinafter, an electric component mounting structure according to an embodiment of the present invention will be described with reference to the accompanying drawings.

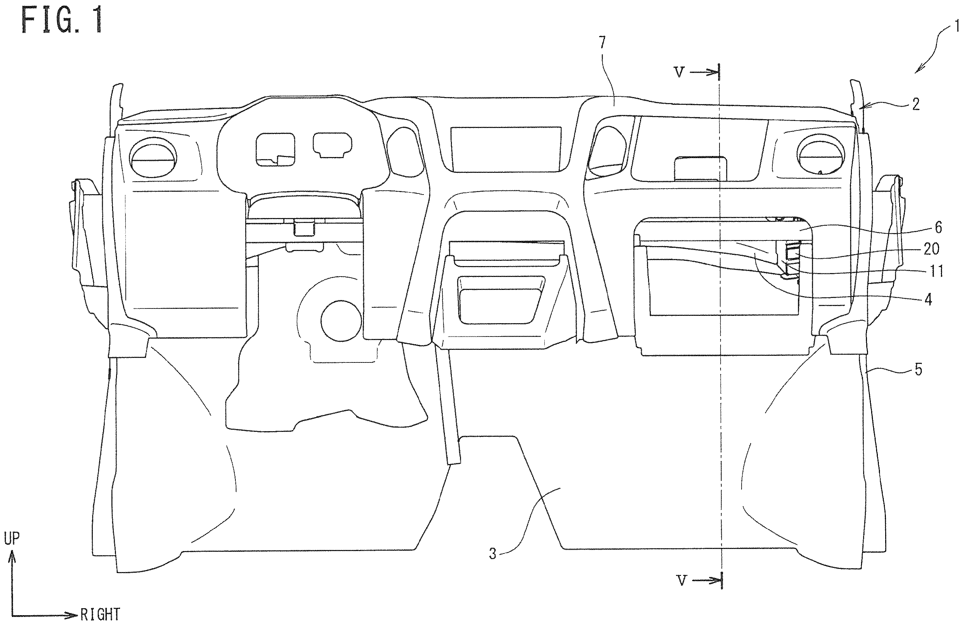

In Figure 1 to Figure 8, up-down, front-rear and left-right directions are assumed to be up-down, front-rear and left-right directions of the electric component mounting structure when installed in the vehicle, and a direction orthogonal to the front-rear direction of the vehicle is the left-right direction and a height direction of the electric component mounting structure is the up-down direction.

Figure 1 to Figure 8 are diagrams illustrating the electric component mounting structure according to the embodiment of the present invention.

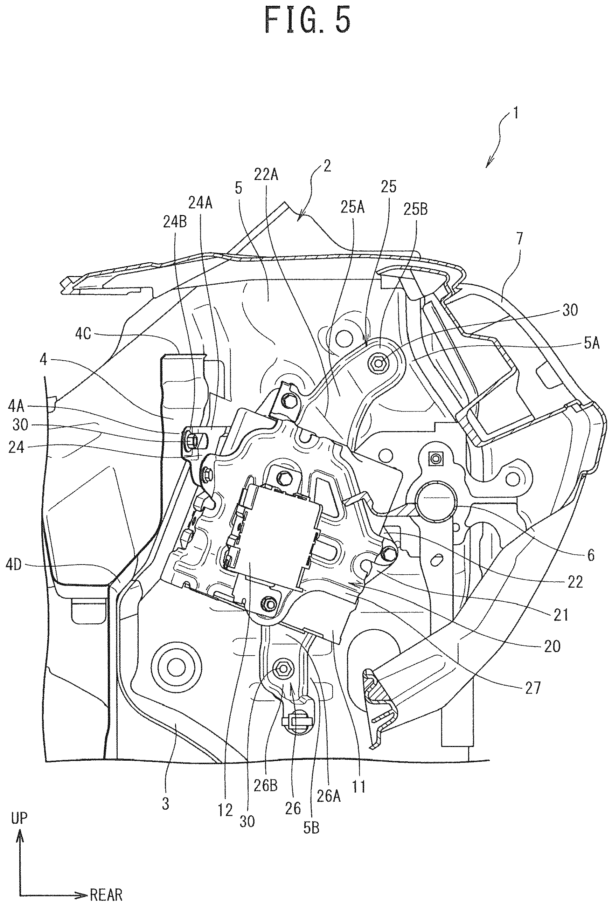

First, a configuration will be described. In Figure 1 and Figure 5, a vehicle 1 is provided with a vehicle body 2. The vehicle body 2 is provided with a dash panel 3, a cowl panel 4, a side panel 5 and a steering support member 6 at a front. The dash panel 3 extends in a vehicle width direction between an engine compartment (not shown) and a vehicle cabin to separate the engine compartment from the vehicle cabin. The dash panel extends upward from a front edge of a floor surface of the vehicle cabin.

The cowl panel 4 is connected to an upper part of the dash panel 3 and extends in the vehicle width direction. The side panel 5 extends in the vehicle front-rear direction and the vehicle up-down direction. The side panels 5 are provided in pairs on the left and right sides at a front of the vehicle 1 and connected to end portions in the vehicle width direction of the dash panel 3 and the cowl panel 4.

The steering support member 6 is disposed at a rear of the cowl panel 4 and extends in the vehicle width direction. The steering support member 6 supports a rotation shaft of a steering wheel (not shown). Both end portions of the steering support member 6 are each connected to the side panel 5.

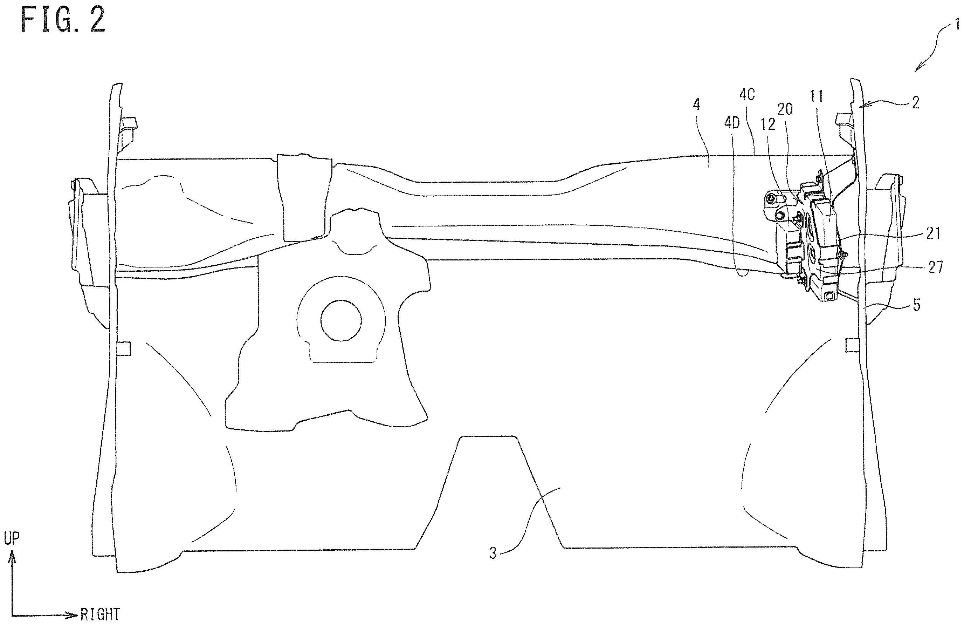

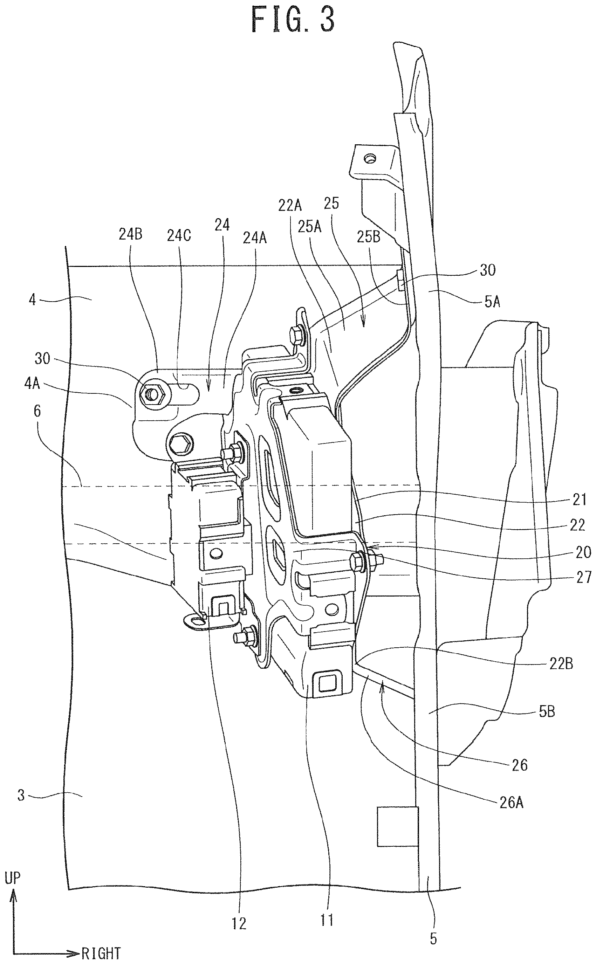

In Figure 2 and Figure 3, the vehicle 1 is provided with the first controller 11, the second controller 12, and a mounting bracket 20. The first controller 11 and the second controller 12 are constructed of control units (ECU: electronic control unit) that electrically control, for example, the electric connection box or drive of a motor (not shown) of the vehicle 1 or the like.

The first controller 11 and the second controller 12 are formed into rectangular parallelepiped shapes made up of two long sides and one short side. The second controller 12 is smaller than the first controller 11, having a size of approximately 1/4 of the first controller 11. The first controller 11 constitutes an electric component in the present invention.

In Figure 3, Figure 4 and Figure 5, the mounting bracket 20 includes a main bracket 21 and a sub-bracket 27. The main bracket 21 together with the sub-bracket 27 holds the first controller 11. The main bracket 21 is fixed to the cowl panel 4 and the side panel 5 of the vehicle body 2.

The first controller 11 and the mounting bracket 20 are disposed behind the cowl panel 4 in the vehicle front-rear direction and in front of the steering support member 6 (see Figure 5).

In Figure 1 and Figure 5, the vehicle 1 is provided with an instrument panel 7 on which instruments (not shown) are disposed. The instrument panel 7 is disposed behind the first controller 11 and the steering support member 6, and covers the first controller 11 and the steering support member 6 from behind and from above.

In Figure 3, Figure 4 and Figure 5, the main bracket 21 of the mounting bracket 20 includes a body part 22 to which the first controller 11 is attached, a front leg part 24 extending forward from the body part 22, an upper leg part 25 extending upward from the body part 22 and a lower leg part 26 extending downward from the body part 22.

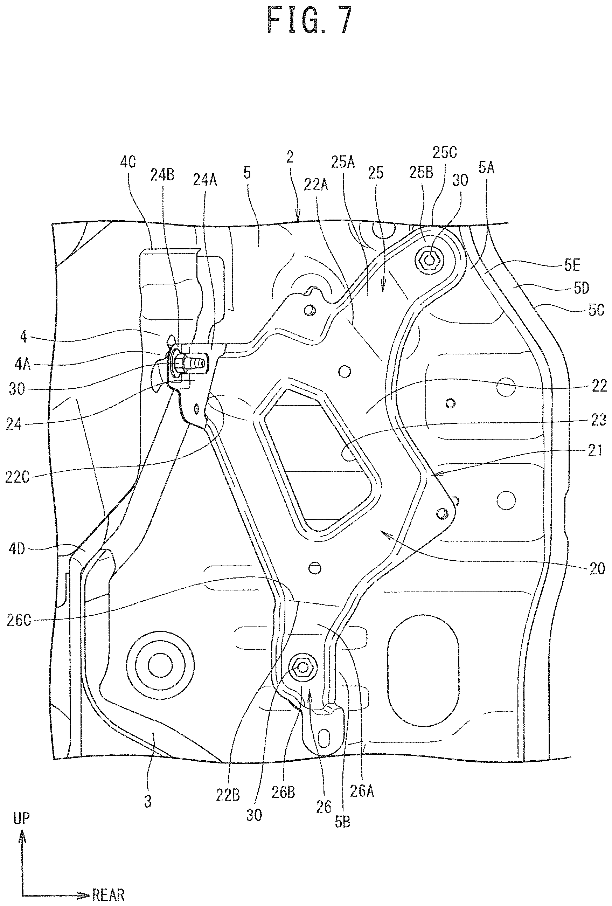

In Figure 7, the body part 22 as a whole is formed into a rectangular flat-plate shape and holds the first controller 11. A rectangular opening 23 for weight reduction and heat dissipation or the like of the first controller 11 is formed in a central part of the body part 22. The front leg part 24, the upper leg part 25 and the lower leg part 26 are connected to the vehicle body 2 using bolts 30.

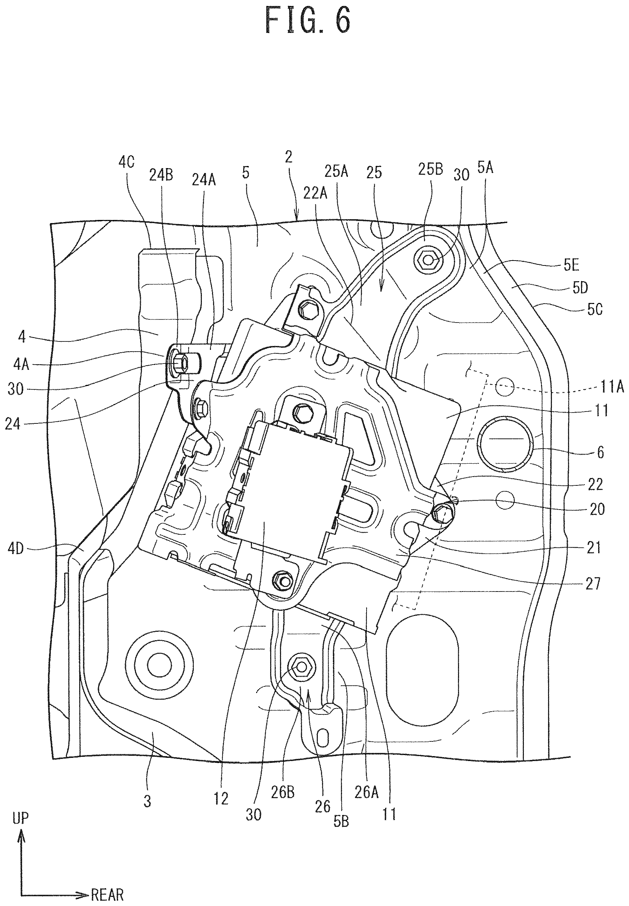

In Figure 6, the cowl panel 4 includes a front mounting point 4A to which the front leg part 24 is connected. The side panel 5 includes an upper mounting point 5A to which the upper leg part 25 is connected and a lower mounting point 5B to which the lower leg part 26 is connected. The front mounting point 4A, the upper mounting point 5A and the lower mounting point 5B are regions where the front leg part 24, the upper leg part 25 and the lower leg part 26 are fixed by fastening of the bolts 30, and include bolt holes (not shown) through which the bolts 30 are fastened.

In Figure 5, the lower mounting point 5B of the side panel 5 is disposed behind the front mounting point 4A of the cowl panel 4. The upper mounting point 5A of the side panel 5 is disposed above the steering support member 6 and behind the lower mounting point 5B. In other words, the lower mounting point 5B is disposed behind the front mounting point 4A in the vehicle front-rear direction. The upper mounting point 5Ais disposed behind the lower mounting point 5B.

The upper leg part 25 of the mounting bracket 20 extends diagonally upward and rearward toward an upper part in a side view of the vehicle. Thus, the upper leg part 25 extends diagonally upward and rearward from an upper part of the body part 22. On the other hand, the lower leg part 26 extends straight downward from a lower part of the body part 22 in a side view of the vehicle. The front leg part 24 extends forward from an upper part of a front end part of the body part 22 in a side view of the vehicle.

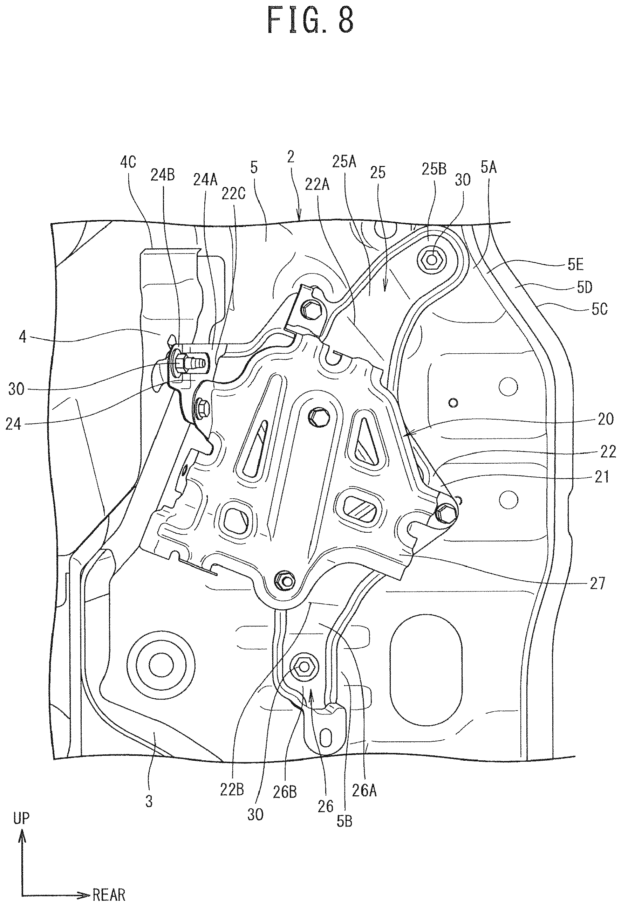

In Figure 8, the front leg part 24 of the mounting bracket 20 is disposed at a position closer to the upper leg part 25 than the lower leg part 26 in the vehicle up-down direction. In other words, a distance between the front leg part 24 and the upper leg part 25 in the vehicle up-down direction is smaller than a distance between the front leg part 24 and the lower leg part 26.

In Figure 3 and Figure 5, the front leg part 24 of the mounting bracket 20 is located above the steering support member 6 in the vehicle up-down direction. The steering support member 6 is disposed behind the first controller 11 and the second controller 12. Note that the steering support member 6 is shown by a broken line so as to display the whole first controller 11 or the like in Figure 3.

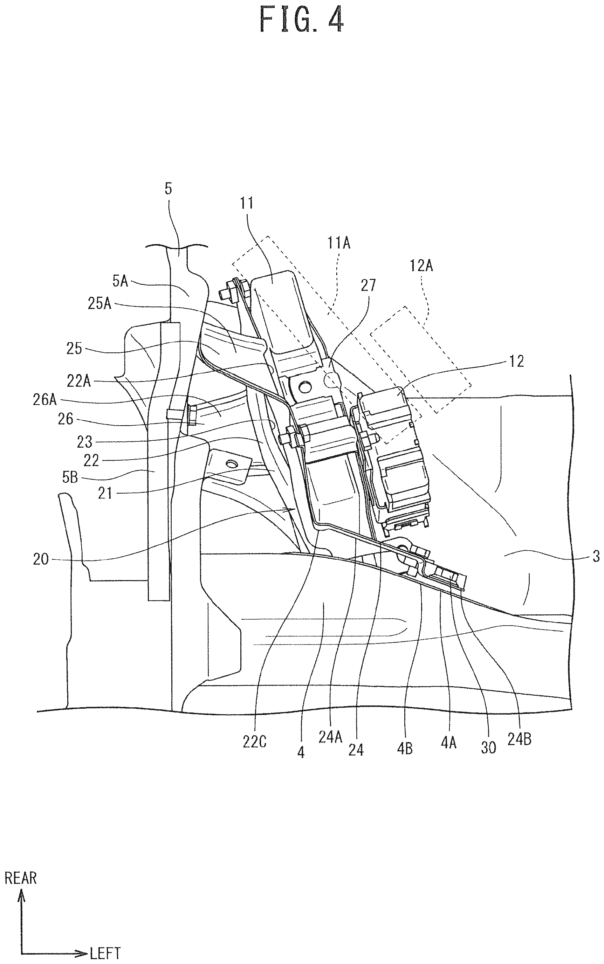

In Figure 3 and Figure 4, the body part 22 of the mounting bracket 20 is disposed apart from the side panel 5 in the vehicle width direction. In other words, the upper leg part 25 and the lower leg part 26 of the mounting bracket 20 extend rightward in the vehicle width direction from the body part 22 toward the side panel 5 so as to form a space between the body part 22 and the side panel 5 on the left.

The front leg part 24 of the mounting bracket 20 extends leftward in the vehicle width direction from the body part 22 along the cowl panel 4 so as to form a space between the body part 22 and the cowl panel 4 at a front of the body part 22. Therefore, the body part 22 is disposed apart from the cowl panel 4 in the vehicle front-rear direction.

The cowl panel 4 includes an inclined part 4B and the inclined part 4B is inclined toward the front as a distance of the inclined part 4B from the side panel 5 increases from a position closest to the first controller 11 in the vehicle width direction. The front mounting point 4A is disposed at the inclined part 4B. The front leg part 24 is disposed between the first controller 11 and the cowl panel 4 away from the first controller 11 and the cowl panel 4, and extends along the inclined part 4B.

In Figure 3, Figure 4 and Figure 6, the upper leg part 25 includes an upper communication part 25A that extends from the body part 22 toward the side panel 5 and an upper mounting part 25B that extends from the upper communication part 25A substantially parallel to the side panel 5 and is connected to the upper mounting point 5A. The upper mounting part 25B is a region at a distal end of the upper leg part 25 in the extending direction. The upper communication part 25A is a region between the upper mounting part 25B of the upper leg part 25 and the body part 22.

The lower leg part 26 includes a lower communication part 26A that extends from the body part 22 toward the side panel 5 and a lower mounting part 26B that extends from the lower communication part 26A substantially parallel to the side panel 5 and is connected to the lower mounting point 5B. The lower mounting part 26B is a region at a distal end of the lower leg part 26 in the extending direction. The lower communication part 26A is a region of the lower leg part 26 between the lower mounting part 26B and the body part 22.

The front leg part 24 includes a front communication part 24A that extends from the body part 22 along the cowl panel 4 and a front mounting part 24B that further extends from the front communication part 24A along the cowl panel 4 and is connected to the front mounting point 4A. The front mounting part 24B is a region at a distal end of the front leg part 24 in the extending direction. The front communication part 24A is a region of the front leg part 24 between the front mounting part 24B and the body part 22.

In Figure 3, a long hole 24C that extends in the vehicle width direction, which is an extending direction of the front mounting part 24B, is formed in the front mounting part 24B and the fastening bolt 30 is inserted into the long hole 24C. When the long hole 24C is formed in the front mounting part 24B, it is possible to adjust a fixing position of the front mounting part 24B to the cowl panel 4.

When the long hole 24C is formed in the front mounting part 24B, if the cowl panel 4 is moved to a rear part due to a forward collision of the vehicle 1, the bolt 30 slides through the long hole 24C, and it is thereby possible to change a relative position of the front leg part 24 with respect to the front mounting part 24B to the cowl panel 4 and easily rotate the first controller 11 up to a position 11A illustrated by a broken line in Figure 4. Note that in Figure 4, the second controller 12 rotates up to a position 12A integrally with the first controller 11 as the first controller 11 rotates.

The mounting bracket 20 includes an upper bent part 22A between the body part 22 and the upper communication part 25A. As illustrated in Figure 3, the upper bent part 22A is bent rightward (side panel 5 side) between the body part 22 and the upper communication part 25A. The upper bent part 22A is bent along a line orthogonal to the extending direction of the upper leg part 25 (hereinafter also referred to as a "bending line"). In the present embodiment, as illustrated in Figure 7, the upper leg part 25 extends in a direction inclined rearward and upward from an upper part of the body part 22 in a side view of the vehicle, and so the bending line of the upper bent part 22A extends in a direction rearward and downward, which is a direction orthogonal to the extending direction (rearward and upward direction) of the upper leg part 25.

The mounting bracket 20 includes a lower bent part 22B between the body part 22 and the lower communication part 26A. As illustrated in Figure 3, the lower bent part 22B is bent rightward (side panel 5 side) between the body part 22 and the lower communication part 26A. The lower bent part 22B is bent along a line (bending line) orthogonal to the extending direction of the lower leg part 26. In the present embodiment, as illustrated in Figure 7, the lower leg part 26 extends straight downward from a lower part of the body part 22 in a side view of the vehicle, and since the extending direction of the lower leg part 26 is downward in the vehicle, the bending line of the lower bent part 22B extends in the vehicle front-rear direction, which is a direction orthogonal to the extending direction of the lower leg part 26.

The mounting bracket 20 includes a front bent part 22C between the body part 22 and the front communication part 24A. As illustrated in Figure 3, the front bent part 22C is bent leftward (opposite side of the side panel 5) between the body part 22 and the front communication part 24A. As illustrated in Figure 7, the bending line of the front bent part 22C extends in the vehicle up-down direction.

In this way, in the present embodiment, the upper bent part 22A and the lower bent part 22B are bent rightward, and the front bent part 22C is bent leftward. In other words, when the upper bent part 22A and the lower bent part 22B are bent rightward from the body part 22, and so the upper leg part 25 and the lower leg part 26 extend rightward so as to be located away from the first controller 11 in the vehicle width direction and approach the side panel 5.

On the other hand, when the front bent part 22C is bent leftward from the body part 22, the front leg part 24 extends leftward so as to approach the first controller in the vehicle width direction and be located away from the side panel 5. As illustrated in Figure 7, when the main bracket 21 of the mounting bracket 20 is seen from the left side, the upper bent part 22A and the lower bent part 22B are bent in a so-called "mountain-folded" state and the front bent part 22C is bent in a so-called "valley-folded" state.

Figure 4 illustrates a plan view of the vehicle of the first controller 11 and the body part 22, and the first controller 11 and the body part 22 are disposed in a posture inclining so as to approach the side panel 5 toward the rear with their longitudinal directions following the vehicle front-rear direction. Here, the longitudinal directions of the first controller 11 and the body part 22 refer to directions along the long sides of the first controller 11 and the body part 22 in a plan view. The front mounting point 4A is located on an opposite side of the side panel 5 with respect to the body part 22 in the vehicle width direction.

In Figure 7, an upper end 25C of the upper leg part 25 is disposed above an upper end 4C of the cowl panel 4. An upper end 26C of the lower leg part 26 is disposed below a bottom end 4D of the cowl panel 4. Here, the position of the upper end 26C of the lower leg part 26 is equal to a position of a base part of the lower leg part 26. The lower bent part 22B is provided at the base part of the lower leg part 26 as described above. The bottom end 4D of the cowl panel 4 is a position where the cowl panel 4 is joined to the dash panel 3.

In Figure 3, Figure 4 and Figure 6, the sub-bracket 27 of the mounting bracket 20 is attached to the body part 22 with the first controller 11 sandwiched and held between the body part 22 of the main bracket 21 and the sub-bracket 27. The second controller 12 is attached to the sub-bracket 27. The second controller 12 is attached to a surface on an opposite side of the first controller 11 of the sub-bracket 27. Therefore, the sub-bracket 27 is sandwiched between the first controller 11 and the second controller 12.

In Figure 6, the sub-bracket 27 is connected to a position among the front leg part 24, the upper leg part 25 and the lower leg part 26 of the body part 22. The side panel 5 includes a flange part 5D formed at an edge 5C and a corner part 5E that is bent so as to rise at a right angle from the flange part 5D. The upper leg part 25 is attached near the corner part 5E. In other words, the aforementioned upper mounting point 5A is provided in the corner part 5E of the side panel 5.

Here, the flange part 5D is a planarly formed region so that the side panel 5 may be joined to the other member (not shown) in a plane and is formed over the entire edge 5C of the side panel 5. The flange part 5D is bent so as to be folded on a rear side in Figure 6 to thereby increase rigidity. A region of the side panel 5 including at least the upper mounting point 5A bulges so as to be located inside (inside the vehicle cabin) the flange part 5D in the vehicle width direction. The corner part 5E of the side panel 5 is a region where the region including the upper mounting point 5A starts rising and bulging from the planar flange part 5D inside (inside the vehicle cabin) in the vehicle width direction at a right angle. Since the corner part 5E of the side panel 5 is a region where a surface constituting the flange part 5D and a surface orthogonal to the flange part 5D are bent in an L shape, thus demonstrating high rigidity.

Next, actions and effects of the present embodiment will be described. In the event of a forward collision of the vehicle 1, the dash panel 3 and the cowl panel 4 are deformed so as to be pushed out rearward by an engine or the like. The side panel 5 is deformed so as to buckle in order starting from the front part.

In the electric component mounting structure of the present embodiment, the mounting bracket 20 includes the body part 22 to which the first controller 11 is attached, the front leg part 24 extending forward from the body part 22, the upper leg part 25 extending upward from the body part 22 and the lower leg part 26 extending downward from the body part 22. The cowl panel 4 includes the front mounting point 4A to which the front leg part 24 is connected and the side panel 5 includes the upper mounting point 5A to which the upper leg part 25 is connected and the lower mounting point 5B to which the lower leg part 26 is connected.

For this reason, in the event of a forward collision of the vehicle 1, of the main bracket 21 of the mounting bracket 20, the front leg part 24, the upper leg part 25 and the lower leg part 26, which are directly fixed to the vehicle body 2, are easily deformed, whereas the body part 22, which is not directly fixed to the vehicle body 2, is not easily deformed.

In the electric component mounting structure of the present embodiment, the lower mounting point 5B is disposed behind the front mounting point 4A and the upper mounting point 5Ais disposed above the steering support member 6 and behind the lower mounting point 5B.

Thus, loads from the cowl panel 4 and the side panel first act on the front leg part 24 disposed at a forefront, then act on the lower leg part 26 disposed behind the front leg part 24 and finally act on the upper leg part 25 disposed behind the lower leg part 26. Therefore, in the event of a forward collision of the vehicle 1, deformation occurs at the front mounting point 4A, the lower mounting point 5B and the upper mounting point 5A in that order so as to move the body part 22 and the first controller 11 rearward. On the other hand, when a collision load is large, breakage occurs finally at the front mounting point 4A, the lower mounting point 5B and the upper mounting point 5A in that order.

In the electric component mounting structure of the present embodiment, the upper leg part 25 extends diagonally rearward and upward so as to be oriented rearward as the upper leg part 25 goes upward in a side view of the vehicle.

Thus, part of the load that will move the first controller 11 rearward acts on the upper leg part 25 as a compressive load including a component force in the extending direction. By receiving the compressive load, the upper bent part 22A, which is a base part of the upper leg part 25, is deformed so that the degree of bending increases. The shape of the upper leg part 25 itself is maintained with no deformation such as folding. Thus, only the upper bent part 22A is deformed with the shape of the upper leg part 25 being maintained, and so the first controller 11 can move rearward and upward as illustrated as the position 11A after movement in Figure 6. Therefore, the first controller 11 can be retracted to a position above the steering support member 6 disposed behind the first controller 11.

Therefore, in the event of a forward collision of the vehicle 1, it is possible to move the first controller 11 rearward and upward in the vehicle, and thereby prevent the first controller 11 from being sandwiched between the cowl panel 4 and the steering support member 6, and crushed and protect the first controller 11 from an impact.

In the electric component mounting structure of the present embodiment, the front leg part 24 is disposed at a position closer to the upper leg part 25 than the lower leg part 26 in the vehicle up-down direction.

Thus, the load with which the cowl panel 4 pushes the front leg part 24 rearward is transmitted more to the upper leg part 25 via the body part 22 than to the lower leg part 26, thus making it more likely to cause compression deformation of the upper leg part 25 in an early stage and making it possible to move the first controller 11 upward more.

In the electric component mounting structure of the present embodiment, the front leg part 24 is located above the steering support member 6 in the vehicle up-down direction.

This makes it possible to dispose the position of the load transmitted from the front leg part 24 to the body part 22 in the vehicle up-down direction at a position above the steering support member 6 of the body part 22. Thus, the load transmitted from the front leg part 24 to the body part 22 acts as a force that moves the body part 22 above the steering support member 6 and can prevent the first controller 11 from being sandwiched between the cowl panel 4 and the steering support member 6, and crushed.

In the electric component mounting structure of the present embodiment, the body part 22 is disposed away from the side panel 5 in the vehicle width direction. The upper leg part 25 includes the upper communication part 25A extending from the body part 22 toward the side panel 5 and the upper mounting part 25B extending from the upper communication part 25A substantially parallel to the side panel 5 and connected to the upper mounting point 5A. The lower leg part 26 includes the lower communication part 26A extending from the body part 22 toward the side panel 5 and a lower mounting part 26B extending from the lower communication part 26A substantially parallel to the side panel 5 and connected to the lower mounting point 5B. Furthermore, the mounting bracket 20 includes an upper bent part 22A provided between the body part 22 and the upper communication part 25A and bent along a line (folding line) orthogonal to the extending direction of the upper leg part 25 and a lower bent part 22B provided between the body part 22 and the lower communication part 26A and bent along a line (folding line) orthogonal to the extending direction of the lower leg part 26.

In this way, by separating the body part 22 from the side panel 5 and bending the upper leg part 25 and the lower leg part 26 at the upper bent part 22A and the lower bent part 22B in advance, it is possible to easily generate deformation that increases the bending angle at the upper leg part 25 and the lower leg part 26 and make it easy to move the mounting bracket 20 rearward and upward.

In addition, since the upper bent part 22A is formed so as to bend along a line (folding line) orthogonal to the extending direction of the upper leg part 25, the upper bent part 22A can be deformed so as to guide the moving direction of the mounting bracket 20 upward and rearward with the load that causes the body part 22 to move rearward. This makes it possible to more suitably prevent the first controller 11 from being sandwiched between the cowl panel 4 and the steering support member 6, and crushed.

In the electric component mounting structure of the present embodiment, the first controller 11 and the body part 22 are disposed in an inclined posture so that the longitudinal direction of the first controller 11 and the body part 22 follows the vehicle front-rear direction in a plan view of the vehicle and so as to approach the side panel 5 as the first controller 11 and the body part 22 move rearward. The front mounting point 4A is located on an opposite side of the side panel 5 with respect to the body part 22 in the vehicle width direction.

In this way, in the event of a forward collision of the vehicle 1, the first controller 11 moves while changing the posture so that the front part of the first controller 11 rotates around the vicinity of the lower mounting point 5B rearward in a plan view of the vehicle.

More specifically, as illustrated in Figure 4, the first controller 11 is displaced to the position 11A illustrated by a broken line in Figure 4. In other words, the first controller 11 changes from a posture in a plan view of the vehicle in which the longitudinal direction of the first controller 11 follows the vehicle front-rear direction to a posture in which the longitudinal direction follows the vehicle width direction. This makes it possible to prevent the first controller 11 from being sandwiched between the cowl panel 4 and the steering support member 6, and crushed.

In the electric component mounting structure of the present embodiment, the body part 22 is disposed away from the cowl panel 4 in the vehicle front-rear direction. The cowl panel 4 includes the inclined part 4B that is inclined forward as the inclined part 4B goes away from the side panel 5 from a position closest to the first controller 11 in the vehicle width direction, and the front mounting point 4A is disposed at the inclined part 4B. The front leg part 24 is located away from the first controller 11 and the cowl panel 4, disposed between the first controller 11 and the cowl panel 4 and extends along the inclined part 4B.

Thus, since the front leg part 24 is located apart from both the first controller 11 and the cowl panel 4, when the cowl panel 4 is pushed out rearward by this distance of separation, it is possible to prevent the cowl panel 4 from immediately colliding with the first controller 11, cause only the front leg part 24 to be deformed and absorb the impact. Since the front leg part 24 extends along the inclined part 4B between the first controller 11 and the cowl panel 4, the impact from the front by the cowl panel 4 can be absorbed by the front leg part 24 being deformed to bend. Therefore, it is possible to protect the first controller 11 from the impact.

In the electric component mounting structure of the present embodiment, the front leg part 24 includes the long hole 24C extending in the vehicle width direction at a coupling position with the front mounting point 4A. The front leg part 24 is fastened to the front mounting point 4A via the bolt 30 inserted into the long hole 24C.

This makes it possible to change the coupling position of the front mounting part 24B to the cowl panel 4 by the length of the long hole 24C. Therefore, in a process in which the first controller 11 rotates up to a position 11A illustrated in Figure 4 and the posture of the first controller 11 changes, the front mounting part 24B moves more easily in a direction opposite to the side panel 5 (leftward) in the vehicle width direction, thus making it possible to reduce the force to prevent rotation of the first controller 11.

### [Reference Signs List]

1 ... vehicle, 2 ... vehicle body, 3 ... dash panel, 4 ... cowl panel, 4A ... front mounting point, 4B ... inclined part, 5 ... side panel, 5A ... upper mounting point, 5B ... lower mounting point, 6 ... steering support member, 11 ... first controller (electric component), 20 ... mounting bracket, 21 ... main bracket, 22 ... body part, 22A ... upper bent part, 22B ... lower bent part, 24 ... front leg part, 24C ... long hole, 25 ... upper leg part, 25A ... upper communication part, 25B ... upper mounting part, 26 ... lower leg part, 26A ... lower communication part, 26B ... lower mounting part, 30 ... bolt

## Claims

1. An electric component mounting structure comprising:
a dash panel (3) extending in a vehicle width direction;
a cowl panel (4) connected to an upper part of the dash panel (3) and extending in the vehicle width direction;
a side panel (5) connected to end portions of the dash panel (3) and the cowl panel (4) in the vehicle width direction and extending in a vehicle front-rear direction and a vehicle up-down direction;
a steering support member (6) disposed behind the cowl panel (4) and extending in the vehicle width direction; and
a mounting bracket (20) that attaches an electric component (11, 12) to a vehicle body (2), **characterized in that**
the mounting bracket (20) comprises:
a body part (22) to which the electric component (11, 12) is attached;
a front leg part (24) extending forward from the body part (22);
an upper leg part (25) extending upward from the body part (22); and
a lower leg part (26) extending downward from the body part (22),
the cowl panel (4) includes a front mounting point (4A) to which the front leg part (24) is connected, the side panel (5) includes an upper mounting point (5A) to which the upper leg part (25) is connected and a lower mounting point (5B) to which the lower leg part (26) is connected,
the lower mounting point (5B) is disposed behind the front mounting point (4A),
the upper mounting point (5A) is disposed above the steering support member (6) and behind the lower mounting point (5B), and
the upper leg part (25) extends diagonally rearward and upward so as to be oriented rearward as the upper leg part (25) goes upward in a side view of the vehicle (1).

2. The electric component mounting structure as claimed in claim 1, **characterized in that** the front leg part (24) is disposed at a position closer to the upper leg part (25) than the lower leg part (26) in the vehicle up-down direction.

3. The electric component mounting structure as claimed in claim 1 or 2, **characterized in that** the front leg part (24) is located above the steering support member (6) in the vehicle up-down direction.

4. The electric component mounting structure as claimed in any one of claims 1 to 3, **characterized in that**
the body part (22) is disposed apart from the side panel (5) in the vehicle width direction,
the upper leg part (25) comprises an upper communication part (25A) extending from the body part (22) toward the side panel (5) and the upper mounting part (25B) extending from the upper communication part (25A) substantially parallel to the side panel (5) and connected to the upper mounting point (5A),
the lower leg part (26) comprises a lower communication part (26A) extending from the body part (22) toward the side panel (5) and the lower mounting part (26B) extending from the lower communication part (26A) substantially parallel to the side panel (5) and connected to the lower mounting point (5B), and
the mounting bracket (20) comprises:
an upper bent part (22A) provided between the body part (22) and the upper communication part (25A) and bent along a line orthogonal to an extending direction of the upper leg part (25); and
a lower bent part (22B) provided between the body part (22) and the lower communication part (26A) and bent along a line orthogonal to an extending direction of the lower leg part (26).

5. The electric component mounting structure as claimed in claim 4, **characterized in that**
the electric component (11, 12) and the body part (22) are disposed in an inclined posture so that a longitudinal direction of the electric component (11, 12) and the body part (22) follows the vehicle front-rear direction in a plan view of the vehicle (1) and so as to approach the side panel (5) as the electric component (11, 12) and the body part (22) go rearward, and
the front mounting point (4A) is located on an opposite side of the side panel (5) with respect to the body part (22) in the vehicle width direction.

6. The electric component mounting structure as claimed in claim 5, **characterized in that**
the body part (22) is disposed away from the cowl panel (4) in the vehicle front-rear direction,
the cowl panel (4) comprises an inclined part (4B) that is inclined forward as the cowl panel (4) goes away from the side panel (5) from a position closest to the electric component (11) in the vehicle width direction,
the front mounting point (4A) is disposed at the inclined part (4B), and
the front leg part (24) is located away from the electric component (11) and the cowl panel (4), disposed between the electric component (11) and the cowl panel (4) and extends along the inclined part (4B).

7. The electric component mounting structure as claimed in claim 5 or 6, **characterized in that**
the front leg part (24) comprises a long hole (24C) extending in the vehicle width direction at a coupling position with the front mounting point (4A) and is fastened to the front mounting point (4A) via a bolt (30) inserted into the long hole (24C).

## Patentansprüche

1. Eine Befestigungsstruktur für eine elektrische Komponente, umfassend:
ein Armaturenbrett (3), das sich in einer Fahrzeug-Breitenrichtung erstreckt,
eine Verkleidungsplatte (4), die mit einem oberen Teil des Armaturenbretts (3) verbunden ist und sich in der Fahrzeug-Breitenrichtung erstreckt,
eine Seitenplatte (5), die mit Endabschnitten des Armaturenbretts (3) und der Verkleidungsplaatte (4) in der Fahrzeug-Breitenrichtung verbunden ist und sich in einer Fahrzeug-Vorne-Hinten-Richtung sowie in einer Fahrzeug-Oben-Unten-Richtung erstreckt,
ein Lenkungsträgerelement (6), das hinter der Verkleidungsplatte (4) angeordnet ist und sich in der Fahrzeug-Breitenrichtung erstreckt, und
eine Montagehalterung (20), die eine elektrische Komponente (11,12) an einer Fahrzeugkarosserie (2) befestigt, **dadurch gekennzeichnet, dass**
die Montagehalterung (20) umfasst:
ein Körperteil (22), an dem die elektrische Komponente (11,12) befestigt ist,
ein vorderes Beinteil (24), das sich von dem Körperteil (22) nach vorne erstreckt,
ein oberes Beinteil (25), das sich von dem Körperteil (22) nach oben erstreckt, und
ein unteres Beinteil (26), das sich von dem Körperteil (22) nach unten erstreckt,
die Verkleidungsplatte (4) einen vorderen Befestigungspunkt (4A) aufweist, mit dem das vordere Beinteil (24) verbunden ist, die Seitenplatte (5) einen oberen Befestigungspunkt (5A) aufweist, mit dem das obere Beinteil (25) verbunden ist, und einen unteren Befestigungspunkt (5B), mit dem das untere Beinteil (26) verbunden ist,
der untere Befestigungspunkt (5B) hinter dem vorderen Befestigungspunkt (4A) angeordnet ist,
der obere Befestigungspunkt (5A) oberhalb des Lenkungsträgerelements (6) und hinter dem unteren Befestigungspunkt (5B) angeordnet ist, und
das obere Beinteil (25) sich diagonal nach hinten und oben erstreckt, so dass es nach hinten ausgerichtet ist, wenn das obere Beinteil (25) in einer Seitenansicht des Fahrzeugs (1) nach oben verläuft.

2. Die Befestigungsstruktur für eine elektrische Komponente nach Anspruch 1, **dadurch gekennzeichnet, dass** das vordere Beinteil (24) an einer Position angeordnet ist, die dem oberen Beinteil (25) näher ist als dem unteren Beinteil (26) in der Fahrzeug-Oben-Unten-Richtung.

3. Die Befestigungsstruktur für eine elektrische Komponente nach Anspruch 1 oder 2, **dadurch gekennzeichnet, dass** das vordere Beinteil (24) in der Fahrzeug-Oben-Unten-Richtung oberhalb des Lenkungsträgerelements (6) angeordnet ist.

4. Die Befestigungsstruktur für eine elektrische Komponente nach einem der Ansprüche 1 bis 3, **dadurch gekennzeichnet, dass**
das Körperteil (22) in der Fahrzeug-Breitenrichtung von der Seitenplatte (5) entfernt angeordnet ist,
das obere Beinteil (25) ein oberes Verbindungsteil (25A) umfasst, das sich von dem Körperteil (22) zu der Seitenplatte (5) erstreckt, und das obere Befestigungsteil (25B) sich von dem oberen Verbindungsteil (25A) im Wesentlichen parallel zu der Seitenplatte (5) erstreckt und mit dem oberen Befestigungspunkt (5A) verbunden ist,
das untere Beinteil (26) ein unteres Verbindungsteil (26A) umfasst, das sich von dem Körperteil (22) zu der Seitenplatte (5) erstreckt, und das untere Befestigungsteil (26B) sich von dem unteren Verbindungsteil (26A) im Wesentlichen parallel zu der Seitenplatte (5) erstreckt und mit dem unteren Befestigungspunkt (5B) verbunden ist, und
die Montagehalterung (20) umfasst
ein oberes gebogenes Teil (22A), das zwischen dem Körperteil (22) und dem oberen Verbindungsteil (25A) vorgesehen ist und entlang einer Linie gebogen ist, die orthogonal zu einer Erstreckungsrichtung des oberen Beinteils (25) ist, und
ein unteres gebogenes Teil (22B), das zwischen dem Körperteil (22) und dem unteren Verbindungsteil (26A) vorgesehen ist und entlang einer Linie gebogen ist, die orthogonal zu einer Erstreckungsrichtung des unteren Beinteils (26) ist.

5. Die Befestigungsstruktur für eine elektrische Komponente nach Anspruch 4, **dadurch gekennzeichnet, dass**
die elektrische Komponente (11,12) und das Körperteil (22) in einer geneigten Stellung angeordnet sind, so dass eine Längsrichtung der elektrischen Komponente (11,12) und des Körperteils (22) in einer Draufsicht auf das Fahrzeug (1) der Fahrzeug-Vorne-Hinten-Richtung folgt und sich der Seitenplatte (5) nähert, wenn die elektrische Komponente (11,12) und das Körperteil (22) nach hinten verlaufen, und
der vordere Befestigungspunkt (4A) sich auf einer in Bezug auf das Körperteil (22) in der Fahrzeug-Breitenrichtung gegenüberliegenden Seite der Seitenplaatte (5) befindet.

6. Die Befestigungsstruktur für eine elektrische Komponente nach Anspruch 5, **dadurch gekennzeichnet, dass**
das Körperteil (22) in der Fahrzeug-Vorne-Hinten-Richtung von der Verkleidungsplatte (4) entfernt angeordnet ist,
die Verkleidungsplatte (4) einen geneigten Teil (4B) umfasst, der nach vorne geneigt ist, wenn die Verkleidungsplatte (4) von der Seitenplatte (5) von einer Position, die der elektrischen Komponente (11) in der Fahrzeugbreitenrichtung am nächsten ist, weg verläuft,
der vordere Befestigungspunkt (4A) an dem geneigten Teil (4B) angeordnet ist, und
das vordere Beinteil (24) von der elektrischen Komponente (11) und der Verkleidungsplatte (4) entfernt angeordnet ist, zwischen der elektrischen Komponente (11) und der Verkleidungsplatte (4) angeordnet ist und sich entlang dem geneigten Teil (4B) erstreckt.

7. Die Befestigungsstruktur für eine elektrische Komponente nach Anspruch 5 oder 6, **dadurch gekennzeichnet, dass**
Das vordere Beinteil (24) ein Langloch (24C) aufweist, das sich in der Fahrzeug-Breitenrrichtung an einer Verbindungsposition mit dem vorderen Befestigungspunkt (4A) und an dem vorderen Befestigungspunkt (4A) über einen Bolzen bzw. eine Schraube (30), die in das Langloch (24C) eingesetzt ist, befestigt ist.

## Revendications

1. Structure de montage d'un composant électrique comprenant :
un panneau (3) de bord s'étendant dans une direction en largeur d'un véhicule ;
un panneau (4) avant relié à une partie supérieure du panneau (3) de bord et s'étendant dans la direction en largeur du véhicule ;
un panneau (5) latéral relié à des parties d'extrémité du panneau (3) de bord et au panneau (4) avant dans la direction en largeur du véhicule et s'étendant dans une direction du véhicule de l'avant à l'arrière et dans une direction du véhicule de haut en bas ;
un élément (6) de support de direction disposé derrière le panneau (4) avant et s'étendant dans la direction en largeur du véhicule ; et
une console (20) de montage, qui fixe un composant (11, 12) électrique à une carrosserie (2) du véhicule, **caractérisée en ce que**
la console (20) de montage comprend :
une partie (22) de corps à laquelle le composant (11, 12) électrique est fixé ;
une partie (24) de jambe avant s'étendant vers l'avant à partir de la partie (22) de corps ;
un partie (25) de jambe supérieure s'étendant vers le haut à partir de la partie (22) de corps ; et
une partie (26) de jambe inférieure s'étendant vers le bas à partir de la partie (22) de corps,
le panneau (4) avant comprend un point (4A) de montage avant, auquel la partie (24) de jambe avant est reliée, le panneau (5) latéral comprend un point (5A) de montage supérieur, auquel la partie (25) de jambe supérieure est reliée et un point (5B) de montage inférieure, auquel la partie (26) de jambe inférieure est reliée,
le point (5B) de montage inférieur est disposé derrière le point (4A) de montage avant,
le point (5A) de montage supérieur est disposé au-dessus de l'élément (6) de support de direction et derrière le point (5B) de montage inférieur, et
la partie (25) de jambe supérieure s'étend en diagonale vers l'arrière et vers le haut, de manière à être orientée vers l'arrière, alors que la partie (25) de jambe supérieure va vers le haut dans une vue de côté du véhicule (1).

2. Structure de montage d'un composant électrique suivant la revendication 1, **caractérisée en ce que** la partie (24) de jambe avant est disposée en une position plus près de la partie (25) de jambe supérieure que ne l'est la partie (26) inférieure dans la direction de haut en bas du véhicule.

3. Structure de montage d'un composant électrique suivant la revendication 1 ou 2, **caractérisée en ce que** la partie (24) de jambe avant est placée au-dessus de l'élément (6) de support de direction dans la direction de haut en bas du véhicule.

4. Structure de montage d'un composant électrique suivant l'une quelconque des revendications 1 à 3, **caractérisée en ce que**
la partie (22) de corps est disposée en étant distincte du panneau (5) latéral dans la direction en largeur du véhicule,
la partie (25) de jambe supérieure comprend une partie (25A) de communication supérieure s'étendant de la partie (22) de corps en direction du panneau (5) latéral et la partie (25B) de montage supérieure s'étendant de la partie (25A) de communication supérieure en étant sensiblement parallèle au panneau (5) latéral et reliée au point (5A) de montage supérieur,
la partie (26) de jambe inférieure comprend une partie (26A) de communication inférieure s'étendant de la partie (22) de corps vers le panneau (5) latéral et la partie (26B) de montage inférieure s'étendant de la partie (26A) de communication inférieure en étant sensiblement parallèle au panneau (5) latéral et reliée au point (5B) de montage inférieur, et
la console (20) de montage comprend :
une partie (22A) coudée supérieure prévue entre la partie (22) de corps et la partie (25A) de communication supérieure et coudée le long d'une ligne orthogonale à une direction d'extension de la partie (25) de jambe supérieure, et
une partie (22B) coudée inférieure prévue entre la partie (22) de corps et la partie (26A) de communication inférieure et coudée le long d'une ligne orthogonale à une direction d'étendue de la partie (26) de jambe inférieure.

5. Structure de montage d'un composant électrique suivant la revendication 4, **caractérisée en ce que**
le composant (11, 12) électrique et la partie (22) de corps sont disposés dans une posture inclinée, de manière à ce qu'une direction longitudinale du composant (11, 12) électrique et de la partie (22) de corps suive la direction de l'avant à l'arrière du véhicule dans une vue en plan du véhicule (1), et de manière à se rapprocher du panneau (5) latéral au fur et à mesure que le composant (11, 12) électrique et que la partie (22) de corps vont vers l'arrière, et
le point (4A) de montage avant est placé d'un côté opposé du panneau (5) latéral par rapport à la partie (22) de corps dans la direction en largeur du véhicule.

6. Structure de montage d'un composant électrique suivant la revendication 5, **caractérisée en ce que**
la partie (22) de corps est disposée en s'éloignant du panneau (4) avant dans la direction de l'avant à l'arrière du véhicule,
le panneau (4) avant comprend une partie (4B) inclinée, qui est inclinée vers l'avant au fur et à mesure que le panneau (4) avant s'éloigne du panneau (5) latéral, à partir d'une position la plus près du composant (11) électrique dans la direction en largeur du véhicule,
le point (4A) de montage avant est disposé à la partie (4B) inclinée, et
la partie (24) de jambe avant est disposée loin du composant (11) électrique et du panneau (4) avant, est disposée entre le composant (11) électrique et le panneau (4) avant et s'étend le long de la partie (4B) inclinée.

7. Structure de montage d'un composant électrique suivant la revendication 5 ou 6, **caractérisée en ce que**
la partie (24) de jambe avant comprend un trou (24C) oblong s'étendant dans la direction en largeur du véhicule à une position de liaison avec le point (4A) de montage avant et est fixée au pont (4A) de montage avant par l'intermédiaire d'un boulon (30) inséré dans le trou (24C) oblong.
